# EUROPÄISCHE PATENTSCHRIFT

(11) **EP 3 535 166 B1**
(45) Veröffentlichungstag und Bekanntmachung des Hinweises auf die Patenterteilung: **12.08.2020**
(21) Anmeldenummer: 17790773.0
(22) Anmeldetag: 26.10.2017
(51) Int. Cl.: B60R 21/232, B60R 21/2338

(54) **GASSACK FÜR EIN KRAFTFAHRZEUG SOWIE VERFAHREN ZUR HERSTELLUNG EINES SOLCHEN GASSACKS**
MOTOR VEHICLE AIRBAG WITH RETAINING STRAP AND METHOD FOR MANUFACTURING SUCH AN AIRBAG
AIRBAG DE VÉHICULE AUTOMOBILE AVEC LIEN DE RETENUE ET PROCÉDÉ DE FABRICATION D'UN TEL AIRBAG

(30) Priorität: 03.11.2016 DE 102016120987
(43) Veröffentlichungstag der Anmeldung: 11.09.2019
(73) Patentinhaber: Dalphi Metal España, S.A., 36213 Vigo (ES)
(72) Erfinder: GRAÑA MENDUIÑA, Joaquin, 36209 Vigo (ES)
(74) Vertreter: ZF Patentabteilung - DIPS
(86) Internationale Anmeldenummer: PCT/EP2017/077405
(87) Internationale Veröffentlichungsnummer: WO 2018/082998

(56) Entgegenhaltungen:
- EP-A1- 2 995 513
- US-A1- 2003 234 523
- US-A1- 2011 042 923

## Beschreibung

Die Erfindung betrifft einen Gassack für ein Kraftfahrzeug, mit einem Befestigungselement zur Montage des Gassacks am Kraftfahrzeug, einer Gassackwand, die gegenüberliegende Wandabschnitte aufweist, und einem langgestreckten, flexiblen Halteband zur Positionierung des Gassacks in seinem entfalteten Zustand, welches sich von einem ersten Bandende zu einem entgegengesetzten zweiten Bandende erstreckt. Ferner betrifft die Erfindung auch ein Verfahren zur Herstellung eines solchen Gassacks.

Gassäcke, insbesondere solche zum Zurückhalten von Fahrzeuginsassen, müssen in ihrem entfalteten, aufgeblasenen Zustand im Fahrzeuginnenraum relativ zum Fahrzeug eine definierte Position einnehmen, um einen vorbestimmten Rückhalteeffekt zu erzielen.

Zur Befestigung im Kraftfahrzeug ist bei den meisten der bekannten Gassäcke ein Rand ihrer Befüllöffnung an einem Gehäuseteil des Gassackmoduls festgeklemmt. Beispiele für derartige Gassäcke sind Frontairbags für Fahrer und Beifahrer.

Darüber hinaus gibt es jedoch auch Seitenairbags, die beispielsweise als Vorhanggassack ausgeführt sind und nicht nur im Bereich ihrer Befüllöffnung, sondern auch durch langgestreckte, flexible Haltebänder am Kraftfahrzeug fixiert sind. Diese Haltebänder sind sowohl am Gassack als auch am Fahrzeug befestigt, um den Abstand zwischen dem Gassack und dem jeweiligen Verankerungspunkt im Kraftfahrzeug zu überbrücken. Bei einem Unfall wird der Gassack durch diese Haltebänder in seiner gewünschten Position gehalten. Üblicherweise sind die Haltebänder an den A-, B-, C-, und/oder D-Säulen des Kraftfahrzeugs befestigt.

Zur Montage eines Haltebands am Kraftfahrzeug ist gewöhnlich ein Befestigungselement vorgesehen, das am Halteband angebracht ist. Im Stand der Technik sind diese Befestigungselemente zumeist Laschen aus Metallblech. Diese Laschen können mit einem hakenartigen Fortsatz versehen sein, um die Laschen beispielsweise in eine Öffnung der Fahrzeugkarosserie einzuklinken. Zur Befestigung der Lasche am Halteband wird das Halteband bisher zumeist durch eine Laschenöffnung gefädelt, woraufhin die beiden freien Bandenden zusammengelegt und zu einem mehrlagigen Ende gefaltet werden, welches anschließend mit der Gassackwand vernäht wird.

Eine solche Montage des Haltebands und der Blechlasche an der Gassackwand ist recht zeitaufwendig und teuer. Zudem stört beim Vernähen der Haltebandenden an der Gassackwand die bereits vormontierte Blechlasche, da sich diese beispielsweise am Nähtisch verhaken kann.

In der EP 2 995 513 A1 ist bereits eine Befestigungsvariante nach dem Oberbegriff von Anspruch 1 beschrieben, bei der sich die Blechlasche mit minimalem Aufwand durch eine Schlingenverbindung nachträglich, das heißt nach dem Vernähen des Haltebands an der Gassackwand, am Halteband fixieren lässt. Allerdings ergibt sich durch das Positionieren, Vorfixieren und Vernähen der beiden freien Bandenden an der Gassackwand nach wie vor ein unerwünscht hoher Arbeitsaufwand.

Aufgabe der Erfindung ist es daher, einen konstruktiv vereinfachten Gassack sowie ein Verfahren bereitzustellen, welches bei geringem Arbeitsaufwand eine rasche Herstellung des Gassacks ermöglicht.

Erfindungsgemäß wird diese Aufgabe gelöst durch einen Gassack der eingangs genannten Art, bei dem sich das Halteband einlagig zwischen dem ersten Bandende und dem zweiten Bandende erstreckt, sodass eine Gassackhaltekraft von genau einem Bandquerschnitt übertragen wird, wobei ausschließlich das erste Bandende des Haltebands mit der Gassackwand verbunden und das Befestigungselement mittels einer Schlingenverbindung am zweiten Bandende angebracht ist. Da bei der Montage des Befestigungselements in diesem Fall nur noch das erste Bandende mit der Gassackwand verbunden werden muss, verringert sich der Arbeitsaufwand erheblich. Zudem ist durch die Schlingenverbindung zu jedem gewünschten Zeitpunkt eine einfache und rasche Montage des Befestigungselements am zweiten Bandende möglich. Insbesondere erstreckt sich das Halteband einlagig zwischen der Gassackwand und dem Befestigungselement, sodass eine Gassackhaltekraft von genau einem Bandquerschnitt übertragen wird.

Bevorzugt weist das Befestigungselement eine Öffnung und das Halteband am zweiten Bandende eine Schlaufe auf, wobei zur Bildung der Schlingenverbindung die Schlaufe des Haltebands durch die Öffnung des Befestigungselements gefädelt und das Befestigungselement durch die Schlaufe gesteckt ist. Auf diese Weise lässt sich das Befestigungselement mit wenigen Handgriffen und ohne zusätzliches Werkzeug schnell und einfach am Halteband montieren. Abgesehen von der Öffnung für das Halteband kann das Befestigungselement ferner noch eine Montageöffnung und/oder einen hakenförmigen Montagefortsatz zur Verankerung des Befestigungselements am Kraftfahrzeug aufweisen.

Als "Schlaufe" wird im Rahmen dieser Anmeldung ein feststehendes Auge bezeichnet, das heißt ein O-förmiger Abschnitt des Haltebands, der sich nicht löst und nicht zuzieht. Im Gegensatz dazu ist in diesem Zusammenhang unter einer "Schlinge" ein Bandabschnitt zu verstehen, der sich bei einer Zugbelastung des Haltebands zuzieht und insbesondere mithilfe einer Schlaufe gebildet wird. Dementsprechend ist das Befestigungselement bei der oben erwähnten Schlingenverbindung mittels einer Bandschlinge am Halteband befestigt.

In einer Ausführungsform des Gassacks ist die Schlaufe durch einen Schlitz am zweiten Bandende des Haltebands gebildet. Das Einbringen, insbesondere Einschneiden eines Schlitzes in das Halteband lässt sich schnell und einfach realisieren, wodurch sich ein besonders geringer Fertigungsaufwand für den Gassack ergibt.

Gemäß einer anderen Ausführungsform des Gassacks ist die Schlaufe durch Falten und Befestigen des zweiten Bandendes am Halteband gebildet. Dabei erfolgt die Befestigung des zweiten Bandendes insbesondere auf der dem zweiten Bandende zugeordneten Hälfte des Haltebands, das heißt näher am zweiten Bandende als am ersten Bandende.

Das erste Bandende erstreckt sich vorzugsweise zwischen die gegenüberliegenden Wandabschnitte der Gassackwand. Durch die Anordnung zwischen den flächigen Wandabschnitten des Gassacks vereinfacht sich die Positionierung und Befestigung des ersten Bandendes, da das Halteband nicht so leicht verrutschen kann.

Die gegenüberliegenden Wandabschnitte der Gassackwand sind bevorzugt durch eine Randnaht miteinander verbunden. Dies stellt eine schnelle und preiswerte Möglichkeit dar, Gassackzuschnitte insbesondere maschinell zu einem aufblasbaren Gassack zu verarbeiten.

Hierbei kann das erste Bandende durch die Randnaht, insbesondere ausschließlich durch die Randnaht, mit der Gassackwand verbunden sein. Auf diese Weise wird beim Zusammennähen des aufblasbaren Gassacks aus einem oder mehreren Zuschnitten der Gassackwand lediglich durch geeignete Positionierung des Haltebands "automatisch" auch das erste Bandende an der Gassackwand befestigt, ohne dass hierfür ein separater Arbeitsschritt notwendig wäre.

Das Halteband ist vorzugsweise ein Textilband, insbesondere ein Gewebeband. Dadurch lässt sich das Halteband preiswert herstellen und mit geringem Aufwand vernähen. Bevorzugt ist die Gassackwand ebenfalls aus einem Gewebe gefertigt, wobei alternativ jedoch auch andere Ausführungen, zum Beispiel aus Kunststofffolie denkbar wären.

Gemäß einer weiteren Ausführungsform ist der Gassack ein Vorhanggassack, insbesondere ein Vorhang-Seitengassack.

Die eingangs genannte Aufgabe wird erfindungsgemäß auch gelöst durch ein Verfahren zur Herstellung eines Gassacks, wobei der Gassack eine Gassackwand mit zwei gegenüberliegenden Wandabschnitten aufweist, sowie ein Befestigungselement mit einer Öffnung und ein langgestrecktes, flexibles Halteband, das sich von einem ersten Bandende zu einem entgegengesetzten zweiten Bandende erstreckt und am zweiten Bandende eine Schlaufe aufweist, wobei sich das Halteband einlagig zwischen dem ersten Bandende und dem zweiten Bandende erstreckt, sodass eine Gassackhaltekraft von genau einem Bandquerschnitt übertragen wird, und wobei das Verfahren folgende Schritte umfasst:
a) Das erste Bandende wird an der Gassackwand befestigt;
b) die Schlaufe am zweiten Bandende des Haltebands wird durch die Öffnung des Befestigungselements gefädelt, woraufhin das Befestigungselement durch die Schlaufe gesteckt und festgezogen wird, sodass sich eine Schlingenverbindung zwischen dem Halteband und dem Befestigungselement ergibt.

Vorzugsweise erfolgt der Schritt a) dabei zeitlich vor dem Schritt b).

Ferner wird gemäß einer Verfahrensvariante im Schritt a) das erste Bandende zwischen den beiden gegenüberliegenden Wandabschnitten angeordnet, wobei die beiden Wandabschnitte randseitig durch eine Randnaht vernäht werden, und wobei durch die Randnaht gleichzeitig auch das erste Bandende an der Gassackwand befestigt wird. Das Halteband ist dabei insbesondere so angeordnet, dass es sich von dem im Inneren des aufblasbaren Gassacks befindlichen, ersten Bandende zu dem außerhalb des aufblasbaren Gassacks befindlichen, zweiten Band ende erstreckt und nahe des ersten Bandendes durch die Randnaht mit den Wandabschnitten verbunden, insbesondere vernäht ist.

Die Schlaufe am zweiten Bandende wird bevorzugt vor den Schritten a) und b) gebildet. Das Halteband ist in diesem Stadium noch eine separate Gassacckomponente und lässt sich daher besonders einfach bearbeiten.

Gemäß einer Verfahrensvariante wird zur Bildung der Schlaufe ein Schlitz am zweiten Bandende eingeschnitten. Durch dieses einfache Schlitzen des Haltebands kann die Schlaufe mit besonders geringem Aufwand hergestellt werden.

Alternativ ist jedoch auch denkbar, dass das zweite Bandende zur Bildung der Schlaufe umgeklappt und mit dem Halteband fest verbunden, insbesondere vernäht oder gespleißt wird.

Weitere Merkmale und Vorteile der Erfindung ergeben sich aus der nachfolgenden Beschreibung bevorzugter Ausführungsformen unter Bezugnahme auf die Zeichnungen. In diesen zeigt:
- Figur 1 eine Seitenansicht eines erfindungsgemäßen Gassacks in einem entfalteten, aufgeblasenen Zustand;
- Figur 2 einen schematischen Detailschnitt II-II des Gassacks gemäß Figur 1 im Bereich des ersten Bandendes eines Haltebands;
- Figur 3 einen Ablauf der Montage eines Befestigungselements am zweiten Bandende eines Haltebands in mehreren Schritten a) bis e);
- Figur 4 eine perspektivische Detailansicht eines am zweiten Bandende des Haltebands montierten Befestigungselements;
- Figur 5 einen schematischen Längsschnitt durch ein Halteband für einen erfindungsgemäßen Gassack gemäß einer alternativen Ausführungsform; und
- Figur 6 eine perspektivische Ansicht eines am Halteband gemäß Figur 5 montierten Befestigungselements.

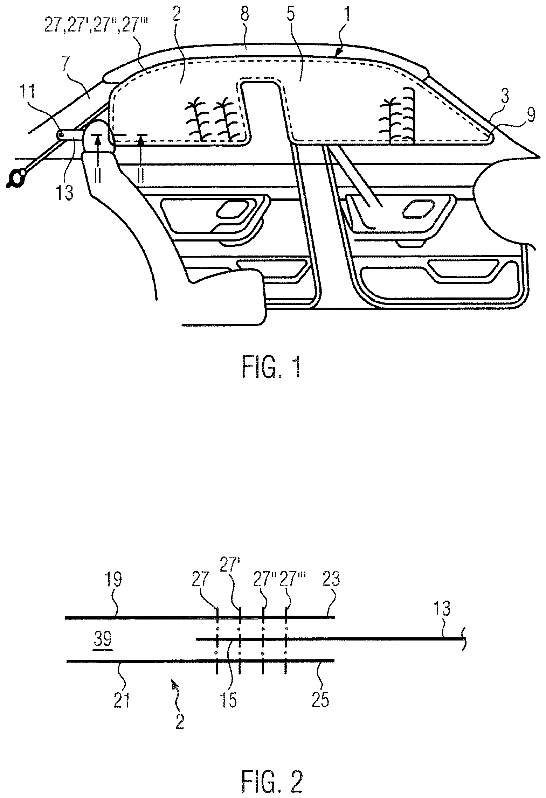

Die Figur 1 zeigt einen seitlich im Kraftfahrzeug angeordneten Kopfairbag, der als Vorhanggassack 1 ausgeführt ist und sich von einer A-Säule 3 über eine B-Säule 5 bis zu einer C-Säule 7 des Kraftfahrzeugs erstreckt.

Der aufblasbare Gassack 1 umfasst eine Gassackwand 2, welche zwei gegenüberliegende Wandabschnitte 19, 21 aufweist und einen mit Gas befüllbaren Innenraum des Gassacks 1 definiert. Die Gassackwand 2 ist insbesondere ein Gewebe, wobei jedoch alternativ auch andere Ausführungen, zum Beispiel aus Kunststofffolie denkbar sind.

Der in Figur 1 dargestellte Gassack 1 befindet sich in einem entfalteten, aufgeblasenen Zustand, in welchem er insbesondere die Köpfe der Front- und Fondpassagiere schützt.

Im gefalteten Zustand ist der Gassack 1 hingegen zumindest teilweise unter einer Abdeckung oder Verkleidung 8 angeordnet.

Der Gassack 1 ist im eingebauten Zustand entlang seines oberen Rands an mehreren nicht näher bezeichneten Befestigungspunkten mit einem Dachholm des Kraftfahrzeugs verbunden. Ferner ist ein vorderer Befestigungspunkt 9 vorgesehen, an dem ein vorderes Ende des Gassacks 1 mit der A-Säule 3 des Kraftfahrzeugs verbunden ist, sowie ein hinterer Befestigungspunkt 11 zum Befestigen eines hinteren Endes des Gassacks 1 an der C-Säule 7 des Kraftfahrzeugs.

Ein langgestrecktes, flexibles Halteband 13 zur Positionierung des Gassacks 1 in seinem entfalteten, aufgeblasenen Zustand erstreckt sich von einem ersten Bandende 15 zu einem entgegengesetzten zweiten Bandende 17 und kann zum Beispiel als Textilband, insbesondere als Gewebeband ausgeführt sein. Dabei ist das Halteband 13 ausschließlich an seinem ersten Bandende 15 mit der Gassackwand 2 verbunden, während am zweiten Bandende 17 ein Befestigungselement 29 zur Montage des Gassacks 1 am Kraftfahrzeug angebracht ist. Konkret ist das Befestigungselement 29 beispielsweise eine Blechlasche und verankert das zweite Bandende 17 am Kraftfahrzeug, insbesondere an einer Fahrzeugkarosserie.

Folglich erstreckt sich das Halteband 13 einlagig zwischen der Gassackwand 2 und dem Befestigungselement 29, sodass eine auftretende Haltekraft von genau einem Bandquerschnitt übertragen wird.

Die Figur 2 zeigt einen Detailschnitt des Gassacks 1 im Bereich des ersten Bandendes 15. Hierbei wird deutlich, dass sich das erste Bandende 15 zwischen die Wandabschnitte 19, 21 der Gassackwand 2 erstreckt und die gegenüberliegenden Wandabschnitte 19, 21 im Bereich ihrer Außenränder 23, 25 durch eine Randnaht 27, 27', 27", 27"' miteinander verbunden sind. In der dargestellten Ausführungsvariante sind die beiden Wandabschnitte 19, 21 beispielhaft durch vier eng beieinanderliegende Randnähte 27, 27', 27", 27"' miteinander verbunden.

Ferner lässt sich der Figur 2 entnehmen, dass das erste Bandende 15 durch die Randnaht 27, 27', 27", 27'", insbesondere ausschließlich durch die Randnaht 27, 27', 27", 27'", mit den beiden Wandabschnitten 19, 21 der Gassackwand 2 verbunden sind.

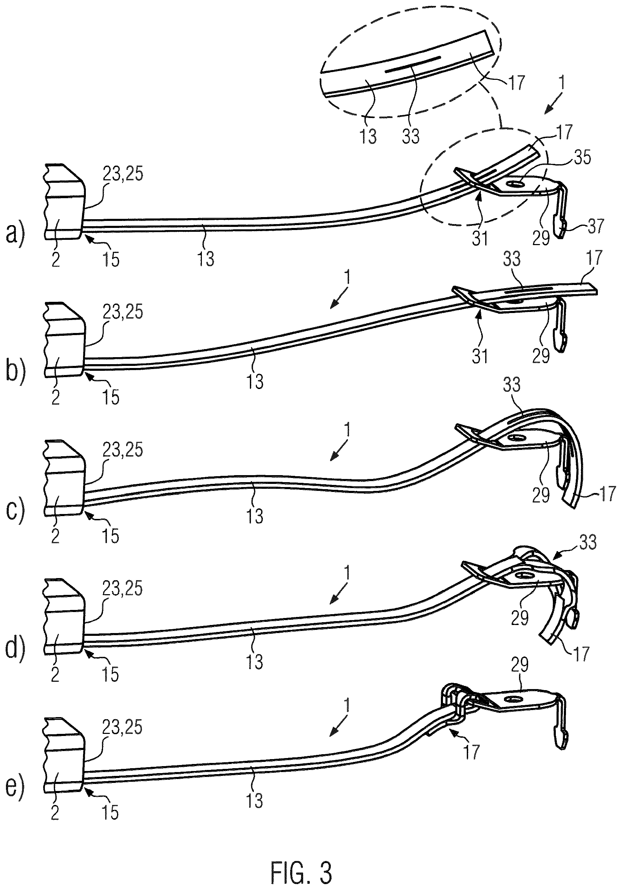

Die Figur 3 zeigt Detailansichten des Haltebands 13 und veranschaulicht die Montage des Befestigungselements 29 am zweiten Bandende 17 des Haltebands 13 mittels einer Schlingenverbindung in den Schritten a) bis e).

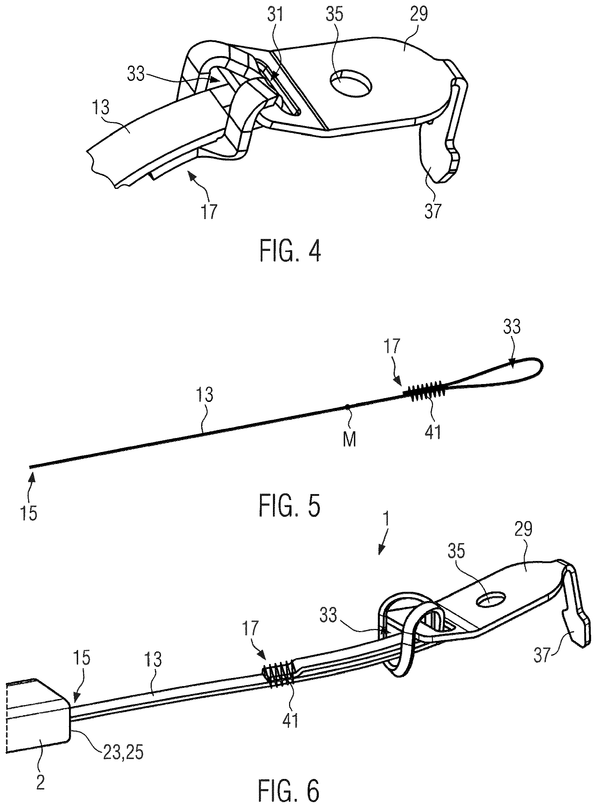

Es wird deutlich, dass das Befestigungselement 29 eine Öffnung 31 und das Halteband 13 am zweiten Bandende 17 eine Schlaufe 33 aufweist, die im Ausführungsbeispiel gemäß den Figuren 3 und 4 konkret als Schlitz ausgeführt ist. Zunächst wird zur Bildung der Schlingenverbindung die Schlaufe 33, also das zweite Bandende 17 mitsamt dem geschlitzten Abschnitt des Haltebands 13, durch die Öffnung 31 des Befestigungselements 29 gefädelt (Schritte a und b).

Abgesehen von der Öffnung 31 weist das Befestigungselement 29 im vorliegenden Ausführungsbeispiel ferner noch eine Montageöffnung 35 sowie einen hakenförmigen Montagefortsatz 37 zur Verankerung des Befestigungselements 29 am Kraftfahrzeug, insbesondere an der Fahrzeugkarosserie auf.

Nachfolgend wird das Befestigungselement 29 durch den Schlitz gesteckt (Schritte c und d) und festgezogen (Schritt e), sodass sich das Halteband 13 im Bereich des Schlitzes nach Art einer Schlinge zuzieht und das Befestigungselement 29 sicher und zuverlässig am zweiten Bandende 17 montiert ist.

Die Figur 4 zeigt eine Detailansicht des am zweiten Bandende 17 des Haltebands 13 montierten Befestigungselements 29.

Im Folgenden wird kurz auf ein vorteilhaftes Verfahren zur Herstellung des Gassacks 1 eingegangen.

Zunächst wird die Gassackwand 2 mit zwei gegenüberliegenden Wandabschnitten 19, 21, das geschlitzte Halteband 13 und das Befestigungselement 29 mit der Öffnung 31 bereitgestellt.

Daraufhin wird das erste Bandende 15 an der Gassackwand 2 befestigt, wobei das erste Bandende 15 insbesondere zwischen den beiden gegenüberliegenden Wandabschnitten 19, 21 angeordnet wird und die beiden Wandabschnitte 19, 21 randseitig durch wenigstens eine Randnaht 27, 27', 27", 27"' miteinander vernäht werden. Dabei wird durch die Randnaht 27, 27', 27", 27'" gleichzeitig auch das erste Bandende 15 an der Gassackwand 2 befestigt.

Wie in Figur 2 zu sehen, ist das Halteband 13 dabei insbesondere so angeordnet, dass es sich vom ersten Bandende 15, welches sich im Inneren 39 des aufblasbaren Gassacks 1 befindet, zum zweiten Bandende 17 erstreckt, welches sich außerhalb des Gassacks 1 befindet, wobei das Halteband 13 nahe des ersten Bandendes 15 durch die Randnaht 27, 27', 27", 27"' mit den Wandabschnitten 19, 21 verbunden wird.

Anschließend wird die Schlaufe 33, also das zweite Bandende 17 mitsamt dem geschlitzten Abschnitt des Haltebands 13, durch die Öffnung 31 des Befestigungselements 29 gefädelt, woraufhin das Befestigungselement 29 durch den Schlitz gesteckt und festgezogen wird, sodass sich schließlich die Schlingenverbindung zwischen dem Halteband 13 und dem Befestigungselement 29 ergibt.

Vorzugsweise wird das erste Bandende 15 mit der Gassackwand 2 vernäht, bevor das Befestigungselement 29 mittels der Schlingenverbindung am zweiten Bandende 17 angebracht wird, damit das Befestigungselement 29 beim Vernähen der Wandabschnitte 19, 21 und des Haltebands 13 nicht stört.

Prinzipiell ist jedoch auch denkbar, dass zuerst das Befestigungselement 29 mit dem Halteband 13 verbunden und erst danach das Halteband 13 mit der Gassackwand 2 verbunden, insbesondere vernäht wird.

Beim Vernähen des Haltebands 13 mit der Gassackwand 2 wird konkret das erste Bandende 15 zwischen den beiden gegenüberliegenden Wandabschnitten 19, 21 angeordnet, bevor die beiden Wandabschnitte 19, 21 randseitig durch die Randnaht 27, 27', 27", 27"' vernäht werden, wobei durch die Randnaht 27, 27', 27", 27'" gleichzeitig auch das erste Bandende 15 an der Gassackwand 2 befestigt wird.

Die Figur 5 zeigt das Halteband 13 gemäß einer alternativen Ausführungsform, welches sich von einem ersten Bandende 15 zu einem entgegengesetzten zweiten Bandende 17 erstreckt und am zweiten Bandende 17 eine Schlaufe 33 aufweist. Die Schlaufe 33 ist im Unterschied zum Halteband 13 gemäß den Figuren 3 und 4 jedoch nicht durch einen Schlitz, sondern durch Falten oder Umklappen und anschließendes Befestigen des zweiten Bandendes 17 am Halteband 13 gebildet.

Mit Bezug auf einen Mittelpunkt M des Haltebands 13 erfolgt die Befestigung des zweiten Bandendes 17 auf der dem zweiten Bandende 17 zugeordneten Hälfte des Haltebands 13, das heißt näher am zweiten Bandende 17 als am ersten Bandende 15.

Zum Fixieren der Schlaufe 33 kann das zweite Bandende 17 in diesem Fall mit dem Halteband 13 vernäht sein, wobei eine solche Naht 41 in den Figuren 5 und 6 schematisch als Zickzacklinie angedeutet ist. Alternativ ist jedoch auch eine andere Befestigung des zweiten Bandendes 17 am Halteband 13 vorstellbar, beispielsweise durch eine gespleißte oder geklebte Verbindung.

Das prinzipielle Verfahren zur Herstellung des Gassacks 1 wird durch die veränderte Ausführung des Haltebands 13, konkret der Schlaufe 33 des Haltebands 13 nicht beeinflusst, sodass diesbezüglich auf die obigen Ausführungen verwiesen wird.

## Patentansprüche

1. Gassack für ein Kraftfahrzeug, mit
einem Befestigungselement (29) zur Montage des Gassacks (1) am Kraftfahrzeug,
einer Gassackwand (2), die gegenüberliegende Wandabschnitte (19, 21) aufweist, und
einem langgestreckten, flexiblen Halteband (13) zur Positionierung des Gassacks (1) in seinem entfalteten Zustand, welches sich von einem ersten Bandende (15) zu einem entgegengesetzten zweiten Bandende (17) erstreckt,
**dadurch gekennzeichnet, dass** sich das Halteband (13) einlagig zwischen dem ersten Bandende (15) und dem zweiten Bandende (17) erstreckt, sodass eine Gassackhaltekraft von genau einem Bandquerschnitt übertragen wird, wobei ausschließlich das erste Bandende (15) des Haltebands (13) mit der Gassackwand (2) verbunden und das Befestigungselement (29) mittels einer Schlingenverbindung am zweiten Bandende (17) angebracht ist.

2. Gassack nach Anspruch 1, **dadurch gekennzeichnet, dass** das Befestigungselement (29) eine Öffnung (31) und das Halteband (13) am zweiten Bandende (17) eine Schlaufe (33) aufweist, wobei zur Bildung der Schlingenverbindung die Schlaufe (33) des Haltebands (13) durch die Öffnung (31) des Befestigungselements (29) gefädelt und das Befestigungselement (29) durch die Schlaufe (33) gesteckt ist.

3. Gassack nach Anspruch 2, **dadurch gekennzeichnet, dass** die Schlaufe (33) durch einen Schlitz am zweiten Bandende (17) des Haltebands (13) gebildet ist.

4. Gassack nach Anspruch 2, **dadurch gekennzeichnet, dass** die Schlaufe (33) durch Umklappen und Befestigen des zweiten Bandendes (17) am Halteband (13) gebildet ist.

5. Gassack nach einem der vorhergehenden Ansprüche, **dadurch gekennzeichnet, dass** sich das erste Bandende (15) zwischen die gegenüberliegenden Wandabschnitte (19, 21) der Gassackwand (2) erstreckt.

6. Gassack nach einem der vorhergehenden Ansprüche, **dadurch gekennzeichnet, dass** die gegenüberliegenden Wandabschnitte (19, 21) der Gassackwand (2) durch eine Randnaht (27, 27', 27", 27"') miteinander verbunden sind.

7. Gassack nach Anspruch 6, **dadurch gekennzeichnet, dass** das erste Bandende (15) durch die Randnaht (27, 27', 27", 27'"), insbesondere ausschließlich durch die Randnaht (27, 27', 27", 27'"), mit der Gassackwand (2) verbunden ist.

8. Gassack nach einem der vorhergehenden Ansprüche, **dadurch gekennzeichnet, dass** das Halteband (13) ein Textilband, insbesondere ein Gewebeband ist.

9. Gassack nach einem der vorhergehenden Ansprüche, **dadurch gekennzeichnet, dass** der Gassack (1) ein Vorhanggassack, insbesondere ein Vorhang-Seitengassack ist.

10. Verfahren zur Herstellung eines Gassacks (1), insbesondere nach einem der vorhergehenden Ansprüche, wobei der Gassack (1) eine Gassackwand (2) mit zwei gegenüberliegenden Wandabschnitten (19, 21) aufweist, sowie ein Befestigungselement (29) mit einer Öffnung (31) und ein langgestrecktes, flexibles Halteband (13), das sich von einem ersten Bandende (15) zu einem entgegengesetzten zweiten Bandende (17) erstreckt und am zweiten Bandende (17) eine Schlaufe (33) aufweist, **dadurch gekennzeichnet, dass** sich das Halteband (13) einlagig zwischen dem ersten Bandende (15) und dem zweiten Bandende (17) erstreckt, sodass eine Gassackhaltekraft von genau einem Bandquerschnitt übertragen wird, wobei das Verfahren folgende Schritte umfasst:
a) Das erste Bandende (15) wird an der Gassackwand (2) befestigt;
b) die Schlaufe (33) am zweiten Bandende (17) des Haltebands (13) wird durch die Öffnung (31) des Befestigungselements (29) gefädelt, woraufhin das Befestigungselement (29) durch die Schlaufe (33) gesteckt und festgezogen wird, sodass sich eine Schlingenverbindung zwischen dem Halteband (13) und dem Befestigungselement (29) ergibt.

11. Verfahren nach Anspruch 10, **dadurch gekennzeichnet, dass** der Schritt a) zeitlich vor dem Schritt b) erfolgt.

12. Verfahren nach Anspruch 10 oder 11, **dadurch gekennzeichnet, dass** das erste Bandende (15) im Schritt a) zwischen den beiden gegenüberliegenden Wandabschnitten (19, 21) angeordnet ist und die beiden Wandabschnitte (19, 21) randseitig durch eine Randnaht (27, 27', 27", 27"') vernäht werden, wobei durch die Randnaht (27, 27', 27", 27'") gleichzeitig auch das erste Bandende (15) an der Gassackwand (2) befestigt wird.

13. Verfahren nach einem der Ansprüche 10 bis 12, **dadurch gekennzeichnet, dass** die Schlaufe (33) am zweiten Bandende (17) vor dem Schritt a) gebildet wird.

14. Verfahren nach einem der Ansprüche 10 bis 13, **dadurch gekennzeichnet, dass** zur Bildung der Schlaufe (33) ein Schlitz am zweiten Bandende (17) eingeschnitten wird.

15. Verfahren nach einem der Ansprüche 10 bis 13, **dadurch gekennzeichnet, dass** das zweite Bandende (17) zur Bildung der Schlaufe (33) umgeklappt und mit dem Halteband (13) fest verbunden wird.

## Claims

1. An airbag for an automotive vehicle comprising
a fastening element (29) for mounting the airbag (1) on the automotive vehicle,
an airbag wall (2) including opposing wall portions (19, 21) and
an elongated flexible tether (13) for positioning the airbag (1) in its deployed state which extends from a first tether end (15) to an opposed second tether end (17),
**characterized in that** the tether (13) extends in a single layer between the first tether end (15) and the second tether end (17) so that an airbag retaining force of exactly one tether cross-section is transferred, wherein exclusively the first tether end (15) of the tether (13) is connected to the airbag wall (2) and the fastening element (29) is arranged on the second tether end (17) by means of a sling connection.

2. The airbag according to claim 1, **characterized in that** the fastening element (29) includes an opening (31) and the tether (13) includes a loop (33) at the second tether end (17), wherein for forming the sling connection the loop (33) of the tether (13) is threaded through the opening (31) of the fastening element (29) and the fastening element (29) is inserted through the loop (33).

3. The airbag according to claim 2, **characterized in that** the loop (33) is formed by a slit on the second tether end (17) of the tether (13).

4. The airbag according to claim 2, **characterized in that** the loop (33) is formed by folding and fastening the second tether end (17) to the tether (13).

5. The airbag according to any one of the preceding claims, **characterized in that** the first tether end (15) extends between the opposing wall portions (19, 21) of the airbag wall (2).

6. The airbag according to any one of the preceding claims, **characterized in that** the opposing wall portions (19, 21) of the airbag wall (2) are connected to each other by an edge seam (27, 27', 27", 27"').

7. The airbag according to claim 6, **characterized in that** the first tether end (15) is connected to the airbag wall (2) by the edge seam (27, 27', 27", 27"'), especially exclusively by the edge seam (27, 27', 27", 27'").

8. The airbag according to any one of the preceding claims, **characterized in that** the tether end (13) is a textile tether, especially a fabric tether.

9. The airbag according to any one of the preceding claims, **characterized in that** the airbag (1) is a curtain airbag, especially a curtain side airbag.

10. A method of manufacturing an airbag (1), especially according to any one of the preceding claims, wherein the airbag (1) includes an airbag wall (2) with two opposing wall portions (19, 21) as well as a fastening element (29) comprising an opening (31) and an elongated flexible tether (13) extending from a first tether end (15) to an opposed second tether end (17) and including a loop (33) at the second tether end (17), **characterized in that** the tether (13) extends as a single layer between the first tether end (15) and the second tether end (17) so that an airbag retaining force of exactly one tether cross-section is transferred, the method comprising the following steps:
a) the first tether end (15) is fastened to the airbag wall (2);
b) the loop (33) of the second tether end (17) of the tether (13) is threaded through the opening (31) of the fastening element (29), whereupon the fastening element (29) is inserted through the loop (33) and is tightened so that a sling connection is formed between the tether (13) and the fastening element (29).

11. The method according to claim 10, **characterized in that** step a) is carried out before step b).

12. The method according to claim 10 or 11, **characterized in that** the first tether end (15) in step a) is arranged between the two opposing wall portions (19, 21) and the two wall portions (19, 21) are sewn up by an edge seam (27, 27', 27", 27'") at the edge side, wherein at the same time the first tether end (15) is fastened to the airbag wall (2) by the edge seam (27, 27', 27", 27"').

13. The method according to any one of the claims 10 to 12, **characterized in that** the loop (33) is formed at the second tether end (17) prior to step a).

14. The method according to any one of the claims 10 to 13, **characterized in that** a slit is cut into the second tether end (17) for forming the loop (33).

15. The method according to any one of the claims 10 to 13, **characterized in that** the second tether end (17) is folded and tightly connected to the tether (13) for forming the loop (33).

## Revendications

1. Airbag pour véhicule automobile, avec
un élément de fixation (29) pour monter l'airbag (1) sur le véhicule automobile,
une paroi de coussin gonflable (2), qui possède des sections de paroi opposées (19, 21), et
une bande de maintien flexible et allongée (13) pour positionner le coussin gonflable (1) dans son état déployé, qui s'étend d'une première extrémité de bande (15) à une seconde extrémité de bande opposée (17),
**caractérisé en ce que** la bande de maintien (13) s'étend en une couche entre la première extrémité de bande (15) et la deuxième extrémité de bande (17), de sorte qu'une force de maintien d'airbag est transmise précisément par une section transversale de bande, pour lequel seule la première extrémité de bande (15) de la bande de maintien (13) est reliée à la paroi du coussin gonflable (2) et l'élément de fixation (29) est fixé à la seconde extrémité de bande (17) au moyen d'une connexion en boucle.

2. Airbag selon la revendication 1, **caractérisé en ce que** l'élément de fixation (29) présente une ouverture (31) et que la bande de maintien (13) à la deuxième extrémité de bande (17) présente une boucle (33), pour lequel la boucle (33) formant la connexion de boucle de la bande de maintien (13) est enfilée à travers l'ouverture (31) de l'élément de fixation (29) et l'élément de fixation (29) est inséré à travers la boucle (33).

3. Airbag selon la revendication 2, **caractérisé en ce que** la boucle (33) est formée par une fente à la deuxième extrémité de bande (17) de la bande de maintien (13).

4. Airbag selon la revendication 2, **caractérisé en ce que** la boucle (33) est formée par pliage et fixation de la seconde extrémité de bande (17) de la bande de maintien (13).

5. Airbag selon l'une des revendications précédentes, **caractérisé en ce que** la première extrémité de bande (15) s'étend entre les sections de paroi opposées (19, 21) de la paroi d'airbag (2).

6. Airbag selon l'une des revendications précédentes, **caractérisé en ce que** les sections de paroi opposées (19, 21) de la paroi d'airbag (2) sont reliées entre elles par une couture de bord (27, 27', 27", 27"').

7. Airbag selon la revendication 6, **caractérisé en ce que** la première extrémité de bande (15) est reliée par la couture de bord (27, 27', 27", 27"'), en particulier, est reliée exclusivement par la couture de bord (27, 27', 27", 27"') à la paroi d'airbag (2).

8. Airbag selon l'une des revendications précédentes, **caractérisé en ce que** la bande de maintien (13) est une bande textile, notamment une bande en tissu.

9. Airbag selon l'une des revendications précédentes, **caractérisé en ce que** l'airbag (1) est un airbag rideau, en particulier un airbag latéral rideau.

10. Procédé de fabrication d'un airbag (1), notamment selon l'une des revendications précédentes, dans lequel l'airbag (1) a une paroi d'airbag (2) avec deux sections de paroi opposées (19, 21), et un élément de fixation (29) avec une ouverture (31) et une bande de maintien allongée et flexible (13) qui s'étend d'une première extrémité de bande (15) à une seconde extrémité de bande opposée (17) et qui présente une boucle (33) à la seconde extrémité de bande (17), **caractérisée en ce que** la bande de maintien (13) s'étend en une couche entre la première extrémité de bande (15) et la deuxième extrémité de bande (17), de sorte qu'une force de maintien de l'airbag est transmise précisément par une section transversale de bande, le procédé comprenant les étapes suivantes:
a) La première extrémité de bande (15) est fixée à la paroi du coussin gonflable (2) ;
b) la boucle (33) à la deuxième extrémité de bande (17) de la bande de maintien (13) est enfilée à travers l'ouverture (31) de l'élément de fixation (29), après quoi l'élément de fixation (29) est inséré et serré à travers la boucle (33), de sorte qu'il existe une connexion en boucle entre la bande de maintien (13) et l'élément de fixation (29).

11. Procédé selon la revendication 10, **caractérisé en ce que** l'étape a) a lieu avant l'étape b).

12. Procédé selon la revendication 10 ou 11, **caractérisé en ce que** la première extrémité de bande (15) est disposée à l'étape a) entre les deux sections de paroi opposées (19, 21) et les deux sections de paroi (19, 21) sont cousus sur leurs bords par une couture de bord (27 , 27', 27", 27"'), pour lequel sera fixée également par la couture de bord (27, 27', 27", 27"') la première extrémité de bande (15) à la paroi du coussin gonflable (2).

13. Procédé selon l'une quelconque des revendications 10 à 12, **caractérisé en ce que** la boucle (33) est formée à la deuxième extrémité de bande (17) avant l'étape a).

14. Procédé selon l'une quelconque des revendications 10 à 13, **caractérisé en ce qu'**une fente est découpée à la seconde extrémité de bande (17) pour former la boucle (33).

15. Procédé selon l'une quelconque des revendications 10 à 13, **caractérisé en ce que** la deuxième extrémité de bande (17) est repliée pour former la boucle (33) et est solidement reliée à la bande de maintien (13).
